**Europäisches Patentamt**

**European Patent Office**

**Office européen des brevets**

(19)

(11) Numéro de publication : **0 519 850 A1**

# (12) DEMANDE DE BREVET EUROPEEN

(21) Numéro de dépôt : **92420210.4**

(22) Date de dépôt : **18.06.92**

(51) Int. Cl.$^5$ : **B25H 7/00, B44B 3/06**

---

(30) Priorité : **21.06.91 FR 9107911**

(43) Date de publication de la demande : **23.12.92 Bulletin 92/52**

(84) Etats contractants désignés : **BE CH DE ES FR GB IT LI NL SE**

(71) Demandeur : " TECHNIFOR" **Z.I. des Tuillières, 114 Quai du Rhône F-01701 Miribel Cédex (FR)**

(72) Inventeur : **Therond, Marcel 359 Chemin du Bois F-69140 Rillieux (FR)**

(74) Mandataire : **Monnier, Guy et al Cabinet Monnier 150 Cours Lafayette B.P. 3058 F-69393 Lyon Cédex 03 (FR)**

---

(54) **Dispositif de marquage par micro-percussion permettant le tracé de signes d'identification sur des objets en atmosphère polluée.**

(57) Une enceinte fermée (1, 41) contient au moins les moyens de transmission (14, 79, 80) et les moyens de déplacement (17, 52) de l'outil (2, 42). Une tige de manoeuvre (10, 46) relie l'outil (2, 42) au moyen de déplacement (17, 52) en traversant l'enceinte (1, 41) grâce à un moyen d'articulation (12, 49) disposé dans un passage ménagé à travers l'enceinte (1, 41). Une pièce intermédiaire de liaison relie l'extrémité supérieure (22, 54) de la tige de manoeuvre au moyen de déplacement.

Fig.1

**EP 0 519 850 A1**

L'invention a trait aux dispositifs pour la réalisation, sur des surfaces d'objets de type divers, de signes d'identification à deux dimensions, du genre de celui qui fait l'objet du brevet français N° 88 16102/2 639 860

De tels dispositifs mettent en oeuvre un outil de marquage par micro-percussion dont la pointe vibrante doit pouvoir se déplacer afin de former, sur un plan de marquage d'un objet des lettres, chiffres ou autres signes d'identification à deux dimensions.

On constate que ces dispositifs de marquage peuvent à la longue être endommagés par les particules en suspension dans l'air. Les particules solides ou liquides peuvent avoir une action corrosive ou abrasive ou encore provoquer des courts-circuits.

Même en présente d'atmosphère relativement peu polluée, les portées du chariot auquel est fixé l'outil de marquage prennent du jeu dû à l'usure et il en est de même pour les pignons d'entraînement et les divers moyens de transmission ou d'articulation. Il en résulte une moins grande précision des tracés des signes d'identification.

On a recherché la possibilité de protéger la partie mécanique du dispositif de marquage des atteintes des particules solides ou liquides qui se trouvent en suspension dans l'atmosphère dans laquelle il est mise en oeuvre. On a recherché aussi la possibilité de réaliser une telle protection sans enlever au dispositif sa souplesse de fonctionnement, sa facilité de mise en oeuvre, ainsi que les qualités de netteté, précision et rapidité de réalisation des tracés qu'il permet d'obtenir.

Le dispositif qui fait l'objet de l'invention, tel que défini à la revendicaiton 1, permet d'atteindre l'ensemble de ces résultats.

Ce dispositif comporte un outil apte à former sur une surface de marquage d'un objet des signes d'identification à deux dimensions, ainsi que des moyens moteurs montés sur un support fixe et commandés par des moyens électroniques tout en étant reliés par des moyens de transmission à des moyens de déplacement aptes à entraîner l'outil de marquage ; au moins les moyens de transmission et de déplacement sont logés à l'intérieur d'une enceinte fermée qui présente un passage traversé par une tige de manoeuvtre susceptible de s'incliner, dans une direction quelconque, d'au moins 5° par rapport à un axe de symétrie disposé dans l'axe de ce passage grâce à un moyen de liaison articulé qui équipe celui-ci. l'extrémité de la tige de manoeuvre extérieure à l'enceinte porte l'outil dont elle assure les déplacements au voisinage immédiat de la surface de marquage. l'extrémité de la tige de manoeuvre intérieure à l'enceinte est reliée aux moyens de déplacement par des moyens de liaison appropriés.

De préférence, l'outil de marquage comporte des moyens de marquage dont l'action s'effectue suivant un axe de travail qui est orienté de façon à se trouver dans le prolongement de l'axe de la tige de manoeuvre. Le moyen de passage articulé de cette tige à travers la paroi de l'enceinte permet à son axe de s'incliner autour d'un point fixe se trouvant sur cet axe qui constitue ainsi le centre de chacune des deux calottes sphériques qui constituent le lien de parcours de chacune des extrémités de la tige de manoeuvre. l'outil de marquage utilisé comporte des moyens aptes à assurer le marquage d'une surface séparée par une distance variable de l'extrémité de cet outil suivant que l'axe de la tige de manoeuvre est perpendiculaire à la surface de marquage, approximativement plane ou incliné d'un angle déterminé par rapport à cette perpendiculaire. lorsque l'outil de marquage est la pointe vibrante d'un outil pneumatique travaillant par micro-percussion on constate que, pour une inclinaison de l'axe de travail de la pointe vibrante, situé dans le prolongement de la tige de manoeuvre, de 10° par rapport à la verticale, la course de la pointe vibrante s'accroît d'une longueur d'approximativement 1,5 % du rayon de marquage. On constate que cet accroissement ne nuit pas de façon importante à la qualité des signes d'identification ainsi formés. Pour certaine application, on peut envisager d'incliner la tige de manoeuvre jusque vers 20° à 25° par rapport à la verticale.

Le moyen de liaison articulé de la tige de manoeuvre, au niveau de son passage à travers l'enceinte, est avantageusement une rotule dont la portée sphérique convexe coopère avec une portée sphérique concave correspondante solidaire de la paroi annulaire de ce passage. On peut utiliser aussi, au lieu d'une rotule, un joint de cardan ou tout type de joint articulé assurant un centrage précis de la tige de manoeuvre au cours de ses déplacements angulaires.

Pour garantir l'étanchéité du passage on fait avantageusement appel à un court manchon en élastomère qui relie de façon étanche une portée réalisé sur la tige de manoeuvre, au dessus ou au dessous de son passage à travers l'enceinte, à un rebord ménagé au voisinage immédiat du passage et solidaire de l'enceinte.

Lorsqu'on utilise pour le marquage un outil pneumatique à pointe vibrante on peut effectuer l'alimentation de cet outil en fluide sous pression, le plus souvent de l'air comprimé, au moyen d'un tuyau souple. Celui-ci peut être relié directement à l'outil de marquage, à l'extérieur de l'enceinte du dispositif. Cette liaison peut aussi être effectué à l'intérieur de l'enceinte en munissant,la tige de manoeuvre d'une canalisation intérieure reliée à sa partie inférieure directement à l'alimentation de l'outil de marquage,au niveau de la liaison de celui-ci avec la tige de manoeuvre. A l'autre extrémité de la tige de manoeuvre, au delà de sa traversée du passage, à l'intérieur de l'enceinte, la canalisation intérieure est reliée à un tuyau qui traverse à nouveau l'enceinte pour rejoindre un moyen d'alimentation en fluide sous pression.

Les moyens de déplacement de l'outil de marquage lui permettant de former les signes d'identification sur la surface de travail sont logés à l'intérieur de l'enceinte et reliés à l'extrémité supérieure de la tige de manoeuvre.

Les moyens de déplacement sont disposés de façon à incliner cette tige, par rapport à un axe de symétrie passant par son point d'articulation, d'un angle imposé à chaque instant par les moyens de commande électriques dans une direction également imposée par ces moyens de commande électriques.

Suivant un mode de réalisation de ces moyens de déplacement, ceux-ci comportent un chariot monté coulissant suivant un axe perpendiculaire à l'axe de symétrie qui est entraîné par un moyen moteur monté sur un support fixe par l'intermédiaire de moyens de transmission appropriés. Le chariot est relié par un bras, orienté radialement par rapport à l'axe de déplacement du chariot, à l'extrémité de la tige de manoeuvre par des moyens de liaison appropriés. Un deuxième moyen moteur, monté aussi sur un support fixe et relié au chariot par d'autres moyens de transmission, entraîne le bras radial autour de l'axe de déplacement du chariot de façon à déplacer l'extrémité supérieure de la tige de manoeuvre dans un plan perpendiculaire à l'axe de déplacement du chariot. La liaison entre l'extrémité du bras radial et l'extrémité de la tige de manoeuvre est,avantageusement réalisée par une pièce entermédiaire qui comporte d'une part une liaison coulissante avec la tige de manoeuvre ou le bras radial et d'autre part d'une liaison articulée suivant deux axes, telle qu'un joint à rotule ou de cardan avec le bras radial ou la tige de manoeuvre.

La transmission entre le premier moyen moteur et le chariot est avantageusement réalisée par une courroie crantée dont le brin entraînant est disposé parallèlement à l'axe de déplacement du chariot, celui-ci étant relié au brin entraînant en un point de celui-ci. La transmission entre le deuxième moyen moteur et le chariot est, par exemple, réalisée au moyen d'un arbre secondaire d'axe parallèle à l'axe de déplacement du chariot, axe de déplacement qui est celui d'un arbre primaire sur lequel le chariot est monté coulissant. Le bras radial comporte une liaison coulissante avec l'arbre secondaire. Cet arbre secondaire est monté en rotation autour de l'axe de l'arbre primaire.

Un moyen de transmission entre le deuxième moyen moteur et cet arbre secondaire est réalisé grâce à une transmission par bielle et manivelle ou encore par courroie crantée.

On utilise avantageusement une telle courroie crantée entrainée par un pignon denté actionné par le deuxième moyen moteur qui fait tourner une roue dentée axée sur l'arbre primaire, un moyen convenable permettant de caler l'arbre secondaire par rapport à la roue dentée, dans sa position angulaire vis à vis de l'arbre primaire, afin d'entraîner cet arbre secondaire et donc le bras radial, autour de l'axe du chariot au moyen de la roue dentée.

Suivant un autre mode de réalisation des moyens de déplacement de la tige de manoeuvre, on utilise un chariot monté coulissant sur deux arbres perpendiculaires entre eux et ne s'intersectant pas, les axes de ces arbres étant perpendiculaires à l'axe de symétrie. Chacun de ces deux arbres est monté mobile transversalement en restant parallèle à lui-même, suivant un axe qui lui est perpendiculaire et parallèle à l'axe de l'autre arbre. Le déplacement transversal de chacun de ces arbres est assuré par un moyen moteur correspondant monté sur un support fixe grâce à un moyen de transmission permettant de l'entraîner avec un minimum de jeu.

De façon avantageuse, la liaison entre chacun de ces deux arbres et le moyen moteur correspondant est assurée par une courroie crantée, orientée parallèlement à l'axe de déplacement transversal de l'arbre et reliée par une pièce de liaison à une extrémité de cet arbre.

Cette courroie crantée est entraînée par un pignon denté, monté sur le moyen moteur correspondant et tendue par une poulie de renvoi.

La liaison entre le chariot et l'extrémité de la tige de manoeuvre est avantageusement réalisée, comme dans le cas du premier mode de réalisation, par une pièce entermédiaire comportant d'une part une liaison coulissante, par exemple avec la tige de manoeuvre et d'autre part une liaison articulée avec le chariot comportant un joint à rotule ou à cardan ou autre ou encore un joint articulé comportant deux arbres perpendiculaires dont les axes ne s'intersectent pas, l'un des deux étant l'arbre secondaire sur lequel le bras radial du chariot est monté coulissant et l'autre un arbre monté sur la pièce intermédiaire.

Suivant un autre mode de réalisation l'entrainement de la tige de manoeuvre par son extrémité située dans l'enceinte peut se faire au moyen de deux vérins télescopiques poussant directement cette tige dans des directions de préférence perpendiculaires entre elles et perpendiculaire à l'axe de la tige de manoeuvre.

De très nombreuses variantes peuvent être apportées à la réalisation des moyens moteur, des moyens de transmission et des moyens de déplacement de l'extrémité de la tige de manoeuvre logés à l'intérieur de l'enceinte du dispositif.

De même, de très nombreux types de moyens de liaison peuvent être utilisés pour relier cette tige de manoeuvre à ces moyens de déplacement. De même de nombreux moyens d'articulation permettant le déplacement angulaire de la tige de manoeuvre au niveau de son passage à travers l'enceinte peuvent être réalisés, en particulier en vue d'assurer une certaine étanchéité de ce passage. On peut utiliser en particulier des joints à rotule, des joints de cardan ou d'autres types de joints. Les joints peuvent comporter des joints d'étanchéité de types variés tels que des joints toriques, des joints à lèvre ou autres. On peut aussi utiliser, comme indiqué plus haut des manchons protecteurs en élastomère. On peut aussi envisager de pressuriser légèrement l'intérieure de l'enceinte.

Les exemples et les figures ci-après, décrivent, de façon non limitative, quatre modes particuliers de réalisation de dispositif suivant l'invention.

La figure 1 est une vue schématique de droite en élévation de la figure 2 représentant un premier mode de réalisation du dispositif suivant l'invention, l'enceinte étant coupée suivant le plan de coupe A - A contenant l'axe X1 - X1.

La figure 2 est une vue de gauche de la figure 1, l'enceinte du dispositif suivant l'invention étant coupée par le plan d coupe B - B contenant l'axe X1 - X1.

La figure 2 A est une vue en coupe suivant le plan B - B, comme la figure 2, du dispositif suivant l'invention équipé d'un joint articulé d'un modèle particulier entre tige de manoeuvre et moyen de déplacement.

La figure 3 est une vue schématique, en élévation et en coupe, suivant le plan de coupe C - C de la figure 4, d'un deuxième mode de réalisation du dispositif suivant l'invention.

La figure 4 est une vue en plan et en coupe, suivant le plan de coupe D - D de la figure 3, du dispositif suivant l'invention.

La figure 5 est une vue schématique de face en élévation de la vue partielle 6 représentant un troisième mode de réalisation du dispositif suivant l'invention, l'enceinte étant coupée suivant le plan de coupe E - E contenant l'axe X6 - X6.

La figure 6 est une vue en plan en coupe, suivant le plan de coupe F-F de la figure 5, du dispositif suivant l'invention.

La figure 7 est une vue schématique représentant un quatrième mode de réalisation du dispositif suivant l'invention, l'enceinte étant coupée suivant un plan de coupe contenant l'axe X7 - X7.

La figure 8 est une vue partielle en coupe selon le plan de coupe G - G de la figure 7, du dispositif suivant l'invention.

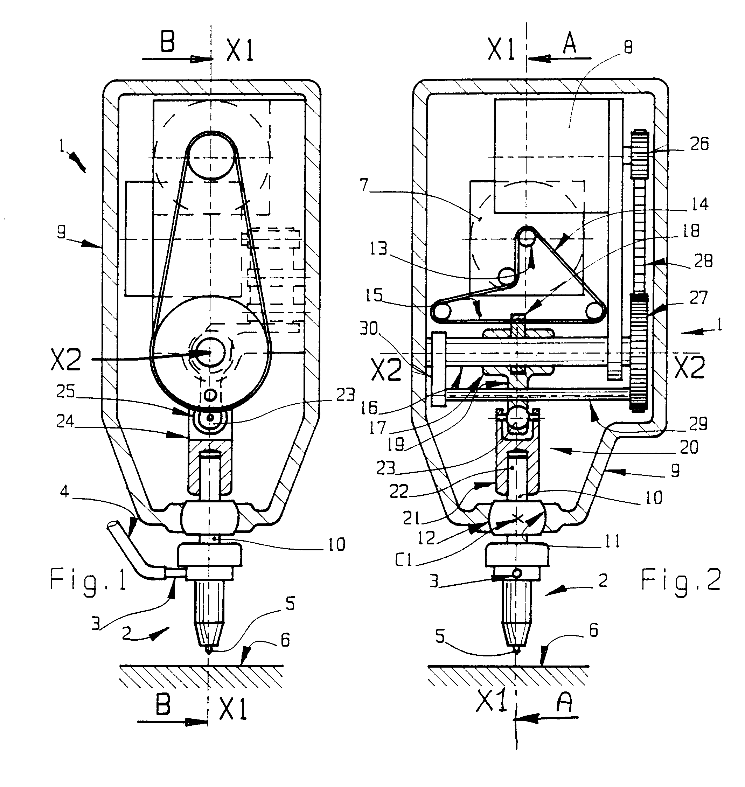

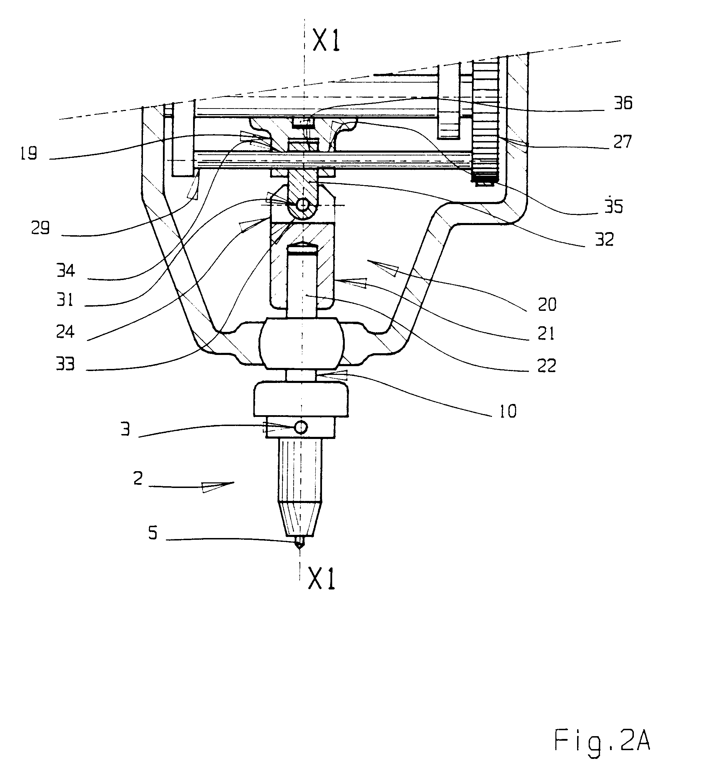

Les figures 1 et 2 présentent un premier mode de réalisation d'un dispositif 1 équipé d'un outil de marquage pneumatique par micro-percussion 2. Cet outil, alimenté en air comprimé par un tube d'entrée 3 relié au tuyau souple 4, lui-même raccordé à une bouteille non représentée, comporte de façon connue une pointe de marquage 5 effectuant de façon cyclique des mouvements aller-retour suivant l'axe de travail de l'outil pour frapper la surface de marquage 6 d'un objet. Dans le cas des figures 1 et 2 l'axe de travail de l'outil 2 se confond avec l'axe de symétrie X1 -X1 du dispositif et la surface de marquage 6 est sensiblement perpendiculaire à cet axe. Des moyens électroniques de commande non représentés commandent deux moyens moteurs pas à pas 7, 8 montés sur un support fixe qui entraînent par l'intermédiaire de moyens de transmission des moyens de déplacement de l'outil de marquage. Pour éviter l'usure mécanique et la corrosion de ces moyens de transmission et de déplacement, au contact de l'atmosphère dans laquelle le dispositif est mis en oeuvre, ce dispositif comporte une enceinte 9 fermée qui contient ces moyens de transmission et de déplacement et aussi les moyens moteurs 7, 8.

L'outil de marquage 2 est monté à l'extrémité inférieure de la tige de manoeuvre 10 de façon que son axe de travail se confonde avec celui de cette tige 10, qui dans le cas de la figure 1 se confond avec l'axe X1 - X1. Cette tige de manoeuvre 10 traverse l'enceinte 9 par un passage annulaire, disposé à la partie inférieure de celle-ci, dont le bord 11 comporte une portée sphérique sur laquelle est articulée la tige de manoeuvre 10 grâce à la rotule sphérique 12 qu'elle traverse.

Le centre de ces surfaces de portées sphériques est le point CI sur l'axe X1 - X1. Cette articulation permet d'incliner la tige de manoeuvre par rapport à l'axe de symétrie X1 - X1 d'un angle pouvant atteindre sans difficulté particulière 10 à 20 ° et même davantage. Les caractéristiques mécaniques des surfaces sphériques 11, 12 en contact sont déterminées pour supporter sans être endommagées les efforts transmis par l'outil pneumatique 2 au cours de son travail.

Les moyens permettant d'actionner la tige de manoeuvre 10 comprennent un premier moyen moteur pas à pas 7 qui entraîne par un pignon denté 13 une courroie crantée 14 qui circule sur des poulies de renvoi de façon que son brin entraînant 15 circule parallèlement à l'arbre 16 d'axe X2 - X2 sur lequel le chariot 17 est monté coulissant. Ce brin entraînant 15 est relié en un point au chariot 17 par une pièce de liaison 18 libre en rotation par rapport à ce chariot. Le premier moteur pas à pas 7 permet ainsi de déplacer le chariot 17 le long de X2 - X2 conformément au programme transmis par les moyens électroniques. On voit Fig 2 en coupe dans le plan passant X1 - X1 le chariot et ses moyens de liaison avec la tige de manoeuvre 10. Le chariot 17 comporte un bras radial 19 relié à l'extrémité supérieure 22 de la tige de manoeuvre 10 par une pièce intermédiaire 20 qui comprend d'une part une liaison coulissante 21 avec la tige de manoeuvre 10 et d'autre part une liaison articulée avec l'extrémité du bras radial. la liaison coulissante est réalisée grâce à un logement ménagé dans la pièce intermédiaire dans lequel coulisse l'extrémité supérieure 22 de la tige de manoeuvre 10 et la liaison articulée est réalisée au moyen d'une rotule 23, solidaire d'une fourche 24 formée dans la pièce intermédiaire 20, rotule autour de laquelle est montée une bague 25 à portée sphérique concave, apte à tourner et osciller autour de la rotule et solidaire du bras radial 19, lui-même solidaire du chariot 17.

Le deuxième moteur pas à pas 8 commandé par les moyens électroniques entraîne en rotation, au moyen du pignon denté 26, la roue dentée 27 de plus grand diamètre au moyen de la courroie crantée 28 tendue entre les deux. Cette roue dentée 27 est calée en rotation sur l'arbre 16 de l'axe X2 - X2.

Un arbre secondaire 29 parallèle à l'arbre 16 est relié à celui-ci par une biellette 30 bloquée en rotation sur les deux arbres au voisinage de leurs extrémités éloignée de la roue dentée 27. l'autre extrémité de l'arbre secondaire 29 est relié à la roue dentée du façon que celle-ci puisse l'entraîner en rotation autour de l'axe X2 - X2. Le bras radial 19 solidaire du chariot 17 comporte une portée coulissante sur l'arbre du chariot 17 comporte une portée coulissante sur l'arbre secondaire 29 qui permet à la roue dentée 27 de déplacer angulairement le bras radial 19 et le chariot 17 autour de l'axe X2 -X2 en entraînant cet arbre secondaire, au moyen de cette roue dentée, autour de cet axe.

On voit que l'action combinée des deux moteurs pas à pas 7, 8 commandés par les moyens électroniques permet, grâce à un programme adapté, de donner à chaque instant à la tige de manoeuvre 10 une inclinaison quelconque par rapport à l'axe de symétrie X1 - X1 dans une direction quelconque,dans les limites d'inclinaison angulaire qu'on lui impose, et de former ainsi sur une surface de marquage au moyen de la pointe de marquage 5 de l'outil 2, par déformation plastique, des signes d'identification.

La figure 2 A représente un mode particulier de réalisation de la liaison articulée entre la pièce intermédiaire 20 et le bras radial 19. Comme dans le cas de la figure 2, la pièce intermédiaire 20 est reliée par sa partie inférieure à l'extrémité supérieure 22 de la tige de manoeuvre 10 par une liaison coulissante 21. La liaison articulée entre cette pièce intermédiaire 20 et le bras radial 19 est réalisé par deux articulations en rotation superposées dont les axes sont perpendiculaires mais ne s'intersectent pas, tout en étant perpendiculaires à l'axe de symétrie X1 - X1 quand la tige de manoeuvre 10 est orientée suivant cet axe X1 - X1.

La première articulation comporte un arbre 31 fixe, solidaire des portées de la fourche 24 dont est munie la pièce 20, perpendiculaire au plan de la figure 2 et perpendiculaire également à l'axe de la tige de manoeuvre 10, confondu sur la figure 2 A avec X1 - X1. La pièce 32 comporte une portée cylindrique 33 libre en rotation autour de l'arbre 31. Le bras radial 19 comporte une fourche à deux branches munies de portées 34, 35 aptes à coulisser sur l'arbre secondaire 29 dont l'axe est perpendiculaire à X1 - X1 et aussi l'arbre 31.

Comme expliqué plus haut, cet arbre secondaire 29 est entraîné en rotation par la roue dentée 27 autour de l'axe X2 - X2 de l'arbre primaire 16. La pièce 32 comporte à son extrémité supérieure une portée 36, montée libre en rotation autour de l'arbre 29 et coulissante le long de cet arbre. Elle est logée entre les deux portées 34, 35 avec un faible jeu qui laisse libre en rotation cette pièce 32 par rapport au bras radial 19.

Dans ces conditions, la double articulation ainsi décrite joue le même rôle que la rotule 23 et la bague 25 de la figure 2.

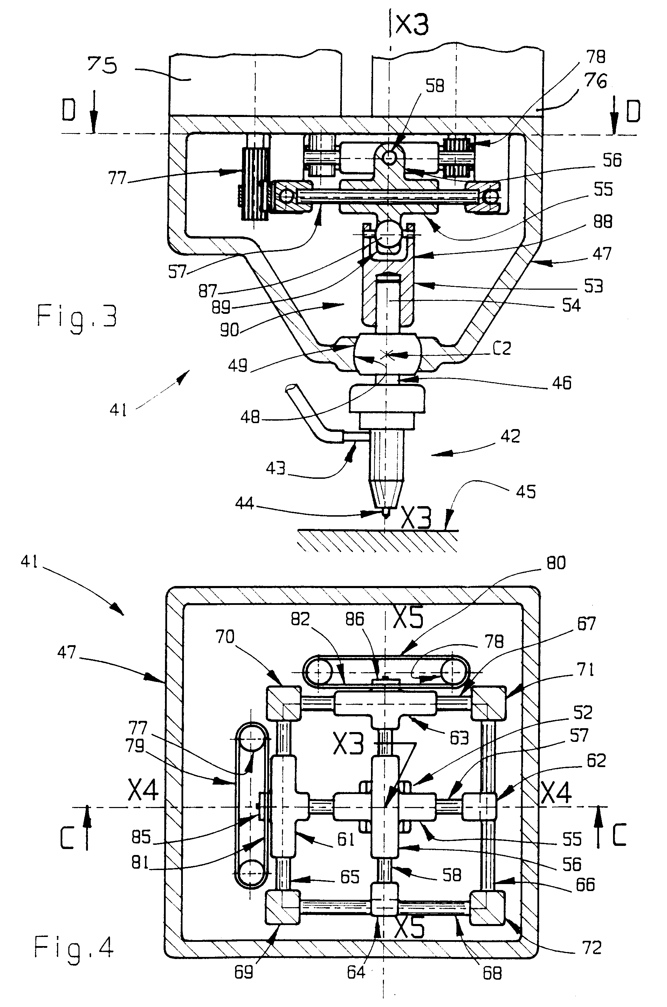

Un deuxième mode de réalisation du dispositif suivant l'invention est représenté aux figures 3 et 4.

Les figures représentent, comme les figures 1 et 2 un dispositif 41 comportant un outil de marquage pneumatique 42 par micro-percussion. Cet outil est alimenté en air comprimé par un tuyau souple d'alimentation non représenté relié au tube d'introduction 43. La pointe de marquage 44 permet de tracer des signes d'identification sur la surface de marquage 45 d'un objet. Dans le cas de ces deux figures 3 et 4, comme dans celui des figures 1 et 2 l'outil 42 est représenté avec son axe de travail orienté suivant l'axe de symétrie X3 - X3 du dispositif 41. Cet axe est également celui de la tige de manoeuvre 46 et est sensiblement perpendiculaire à la surface de marquage 45. La tige de manoeuvre 46 pénètre dans l'enceinte fermée 47, contenant les moyens de transmission et de déplacement de l'outil 42, par un passage muni d'une portée sphérique 48 situé à la partie inférieure de l'enceinte 47. Cette portée sphérique concave 48 coopère avec la rotule sphérique 49 solidaire de la tige de manoeuvre 46.

Cette rotule de centre C2 permet une inclinaison angulaire de la tige de manoeuvre 46 pouvant atteindre 10 à 20 ° et même davantage par rapport à l'axe de symétrie X3 - X3.

Les moyens permettant de déplacer cette tige de manoeuvre 46 comprennent un chariot 52 relié par une pièce intermédiaire 53 à l'extrémité 54 de la tige de manoeuvre 46. Le chariot 52 est muni de deux portées superposées 55, 56 qui lui permettent de coulisser sur deux arbres mobiles 57, 58, dont les axes X4 -X4, X5 - X5 sont perpendiculaires entre eux et perpendiculaires à l'axe de symétrie X3 - X3. Les arbres mobiles sont munis de pièces de liaison comportant des portées 61, 62, 63, 64, montées coulissantes sur les arbres fixés 65, 66, 67, 68 dont les extrémités sont solidarisées avec l'enceinte 47 par des pièces de fixation 69, 70, 71, 72. Les arbres 65, 66 sont parallèles à X5 - X5 et les arbres 67, 68 à X4, - X4.

Les deux moteurs pas à pas 75, 76, commandés par des moyens électroniques suivant un programme déterminé sont munis de pignons dentés 77, 78, qui entraînent respectivement les courroies crantées 79, 80 tendues par des poulies de renvoi de façon que leurs brins entraînant 81, 82 soient orientés parallèlement aux arbres fixes 65, 67.

Les brins entraînants 81, 82 sont reliés respectivement aux portées coulissantes 61, 63 par des moyens d'accrochage 85, 86.

Ainsi, les deux moteurs pas à pas 75, 76, commandés par les moyens électroniques, permettent à chaque instant d'imposer au chariot 52 des coordonnées précises suivant deux axes perpendiculaires. Comme dans le cas du premier mode de réalisation du dispositif, la pièce intermédiaire 53 assure une liaison avec un minimum de jeu entre le chariot 52 et l'extrémité supérieure 54 de la tige de manoeuvre 46.

Cette pièce intermédiaire 53 comporte à son extrémité supérieure une fourche 88 dans laquelle est logée une rotule 87 avec laquelle coopère une bague à portée sphérique solidaire de chariot 52.

A son extrémité inférieure, la pièce intermédiaire 53 comporte une liaison coulissante 90 avec la tige de manoeuvre 46 grâce à un logement dans lequel est engagée coulissantes avec un faible jeu l'extrémité supérieure 54 de la tige de manoeuvre 46.

Le deuxième mode de réalisation du dispositif suivant l'invention présente l'avantage de l'utilisation d'un même moyen de déplacement, actionné par des moyens semblables de transmission, pour conduire l'outil permettant de former sur la surface de marquage les signes distinctifs, en imposant des coordonnées précises suivant deux axes perpendiculaires à ce déplacement. Le déplacement angulaire acceptable pour tracer ces signes étant sensiblement le même dans toutes les directions, il suffit d'ajuster la longueur de la tige de manoeuvre de façon à obtenir une course suffisante de l'outil de marquage pour couvrir la surface de marquage.

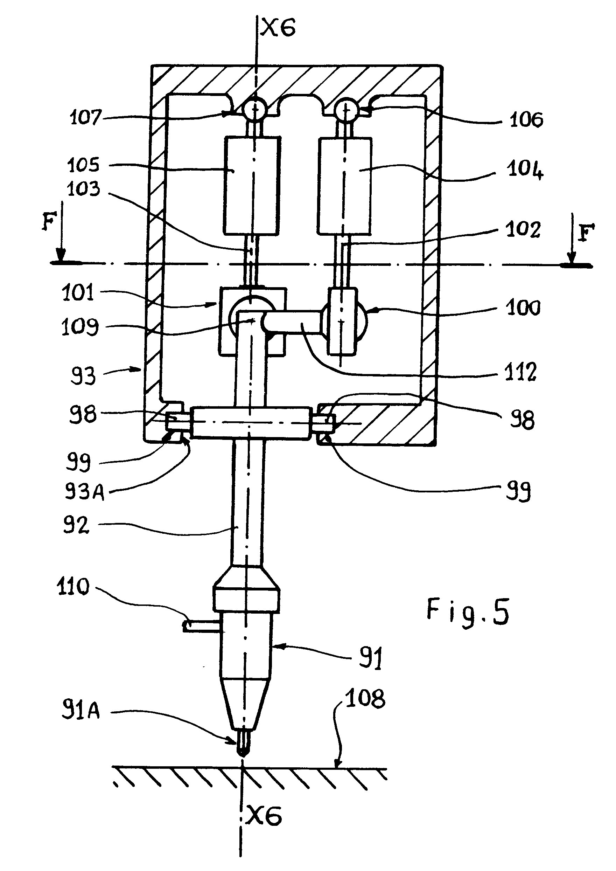

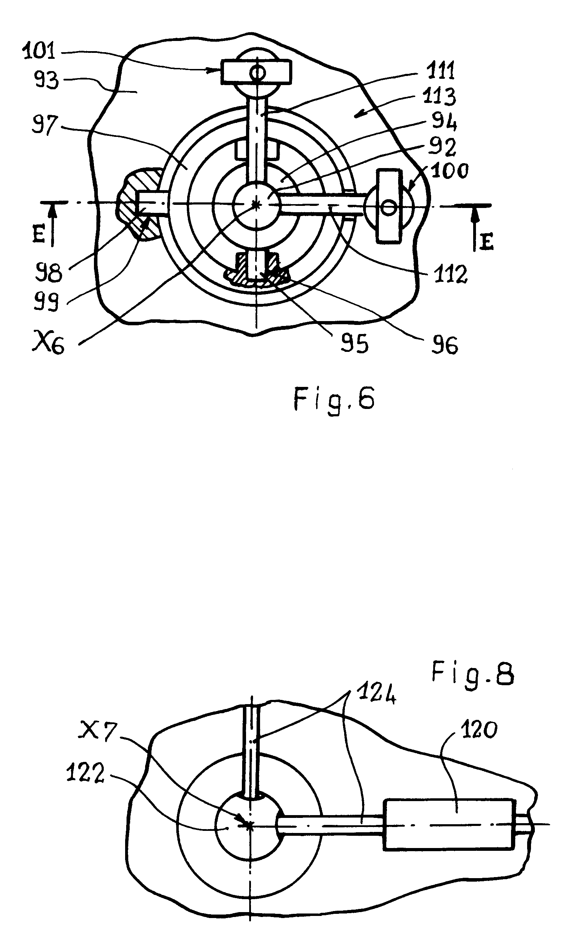

Les figures 5 et 6 représentent un troisième mode de réalisation comportant comme dans les précédents un outil de marquage à percussion 91 fixé à une tige de commande 92 dont l'autre extrémité 109 située dans l'enceinte 93 est reliée à des moyens d'actionnement. Cette tige traverse la paroi de l'enceinte 93 grâce à une liaison articulée lui permettant de prendre n'importe quel angle dans l'espace dans la limite d'environ 25° par rapport à l'axe X6-X6 sensiblement perpendiculaire à la surface à marquer. Elle est constituée d'un anneau 94 attaché à la tige 92 et supportant deux tourillons 95 diamétralement opposés, situés sur un même axe perpendiculaire à l'axe X6-X6 et tournant eux même dans des alésages 96 appartenant à un deuxième anneau 97 de centre confondu avec le premier. Ce deuxième anneau comporte également deux tourillons 98 situés sur un même axe à la fois perpendiculaire à l'axe X6-X6 et à l'axe des deux tourillons de l'anneau 94 et tournant dans deux alésages 99 appartenant à l'enceinte 93.

Dans une première variante à l'extrémité 109 de la tige 92 située dans l'enceinte sont attachés deux bras 111 et 112 perpendiculaires entre eux et faisant un angle pouvant être quelconque avec l'axe de la tige 92, ils sont munis d'articulation à rotule 100 et 101 attachées à l'extrémité de tige 102 et 103 de vérins télescopiques 104 et 105 disposés selon une direction de préférence perpendiculaire à l'axe des deux bras 111 et 112. les corps de ces vérins sont eux même reliés par leur extrémité arrière à la paroi de l'enceinte par des liaisons à rotule 106 et 107.

Ces vérins, de préférence électriques, sont commandés par des moyens électroniques non représentés de manière à permettre la rotation de la tige 92 par rapport à l'axe X6-X6.

Comme dans les versions précédentes l'arrivée d'air sur le stylet peut se faire par un tuyau 110 extérieur à l'enceinte ou par un canal situé dans la tige 92.

On voit que l'action combinée des deux vérins 104 et 105 commandés par les moyens électroniques permet, grâce à un programme adapté, de donner à chaque instant à la tige de manoeuvre 92 une inclinaison quelconque par rapport à l'axe X6-X6 dans une direction quelconque,dans les limites d'inclinaison angulaire qu'on lui impose, et de former ainsi sur une surface à marquer 108 au moyen de la pointe de marquage de l'outil 91, par déformation plastique, des signes d'identification.

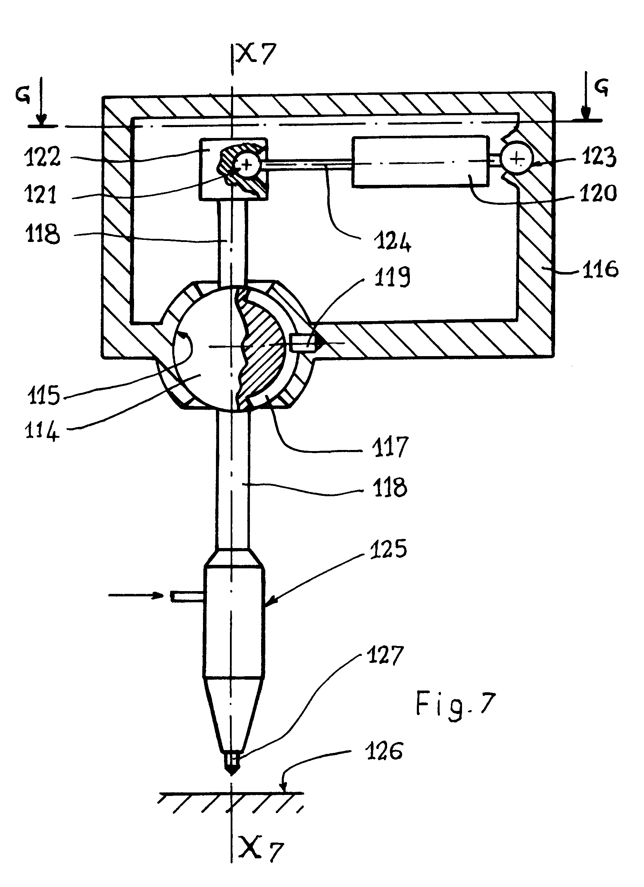

La figure 7 montre une autre variante de liaison de la tige avec l'enceinte, elle consiste à remplacer la liaison constituée en particulier des anneaux 94 et 97 (voir figure 6) par une sphère 114 pivotant dans un logement correspondant 115 de l'enceinte 116. Cette sphère présentant la particularité de comporter une gorge 117 dans un plan parallèle à l'axe de la tige 118 et acceuillant avec un jeu faible une tige cylindrique 119 fixée dans un alésage de la sphère 115 dont l'axe passe par le centre de la sphère.Cette tige est destinée à empêcher la rotation de la tige 118 selon son axe ce qui constituerait un mouvement parasite par rapport au mouvement attendu de part ou d'autre de l'axe X7-X7 grâce au pilotage des deux vérins 120.

Les figures 7 et 8 montrent également une autre variante du mode de commande par vérins télescopiques, ici les deux vérins 120 d'axe situé de préférence dans un même plan ont l'extrémité de leur tige 124 attachées directement par des rotules 121 à l'extrémité 122 de la tige 118, ces vérins forment de préférence entre eux un angle droit de même qu'avec la tige 118 de telle façon que les mouvements de leur tige, lorsqu'ils seront indépandants, provoquent des déplacements angulaires dans des directions perpendiculaires. l'extrémité opposée à celle d'où sort la tige est attachée à la paroi de l'enceinte également par des liaisons à rotule 123.

Ces troisième et quatrième réalisations présentent l'avantage par rapport aux premières d'une plus grande simplicité mécanique et d'un moindre encombrement. Elles impliquent une commande des vérins telle que, le mouvement de l'un induisant en raison de la présence de l'autre un déplacement qui n'est pas dans un plan, il doit y avoir une correction grâce à un petit mouvement de l'autre vérin.

Comme cela a été indiqué plus haut, il existe de très nombreuses variantes ou modifications qui pouvant être apportées au dispositif suivant l'invention qui ne sortent pas du domaine de celle-ci.

Les variantes et modifications sont par exemple celles qui ont été indiquées concernant les nombreux types d'articulations utilisables, les différents moyens de transmission et de déplacement ainsi que les moyens d'étanchéité aptes à accroître encore l'étanchéité de l'enceinte contenant ces moyens de transmission et de déplacement.

**Revendications**

1. Dispositif de marquage, du genre comportant un outil apte à former sur une surface d'un objet des signes d'identification, ainsi que des moyens moteurs qui montés sur un support fixe et commandés par des moyens électroniques, sont reliés par des moyens de transmission à des moyens de déplacement aptes à entraîner l'outil précité, caractérisé en ce qu'au moins les moyens de transmission et de déplacement sont logés à l'intérieur d'une enceinte fermée (9, 47, 93, 115) qui comporte à sa partie inférieure un passage traversé par une tige de manoeuvre (10, 46, 92, 117) à l'extrémité inférieure de laquelle est fixé l'outil de marquage (2, 42, 91, 125) tandis qu'un moyen d'articulation (11, 12, 48-49, 113, 114-115), disposé au niveau de ce passage, permet d'incliner cette tige de manoeuvre d'un angle variable pouvant atteindre au moins 5° dans une direction quelconque autour d'un axe de symétrie (X1 - X1, X3 X3, X4 - X4, X5 - X5, X6 - X6, X7 - X7) situé dans l'axe de ce passage afin de déplacer l'outil pour former les signes d'identification sur la surface de marquage (6, 45, 108, 126), l'extrémité supérieure de la tige de manoeuvre (23, 54, 92, 118), située à l'intérieur de l'enceinte (9, 47, 93, 116), étant reliée aux moyens de déplacement par des moyens de liaison appropriés.

2. Dispositif suivant la revendication 1, caractérisé en ce que l'outil (2, 42, 91, 125) comporte des moyens de marquage dont l'action s'effectue suivant un axe de travail situé dans le prolongement de l'axe de la tige de manoeuvre (10, 46, 92, 118).

3. Dispositif suivant la revendication 1, caractérisé en ce que la surface de marquage (6, 45, 108, 126) est orientée de façon que l'axe de symétrie (X1 - X1, X3 - X3, X4 - X4, X5 - X5, X6 - X6, X7 - X7) du passage traversé par la tige de manoeuvre (10, 46, 92, 118) lui soit sensiblement perpendiculaire.

4. Dispositif suivant la revendication 1, caractérisé en ce que l'axe de la tige de manoeuvre (10, 46, 92, 118) est incliné par rapport à une perpendiculaire à la surface de marquage d'un angle au plus égal à 25°.

5. Dispositif suivant la revendication 1, caractérisé en ce que le moyen d'articulation (11-12, 48-49, 114-115) de la tige de manoeuvre (10, 46, 118) à travers le passage comporte une rotule sphérique montée sur une portée correspondante.

6. Dispositif suivant la revendication 5, caractérisé en ce que la rotule sphérique comporte une gorge (117) qui est orientée parallèlement à l'axe de la tige (118) et qui reçoit avec un jeu faible une tige cylindrique fixe (119) dont l'axe passe par le centre de la rotule et qui est fixée à la sphère creuse (115) de la rotule.

7. Dispositif suivant la revendication 1, caractérisé en ce que la liaison entre la tige de manoeuvre et l'enceinte est constituée par un joint de cardan formé par deux anneaux (94 et 97) de centre commun, l'un (94) fixé à la tige et pivotant selon un diamètre à l'intérieur du deuxième (97), lequel pivote selon un de ses diamètres perpendiculaire au diamètre précédent à l'intérieur d'un alésage (93A) de l'enceinte (93) par lequel sort la tige (92).

8. Dispositif suivant la revendication 1, caractérisé en ce qu'un manchon en élastomère relie de façon étanche une portée réalisée sur la tige de manoeuvre, au dessus ou au dessous de son passage à l'enceinte, à un rebord formé sur l'enceinte au voisinage du passage.

9. Dispositif suivant la revendication 1, caractérisé en ce que l'outil de marquage (2, 4, 91, 125) est un outil pneumatique comportant une pointe vibrante (5, 44, 91A, 127) apte à se déplacer d'un mouvement cyclique suivant l'axe de travail, cette pointe vibrante formant par micro-percussion des signes d'identification par déformation plastique point par point.

10. Dispositif suivant la revendication 9, caractérisé en ce que l'alimentation en fluide sous pression de l'outil de marquage est réalisée au moyen d'un tuyau souple (4) branché directement sur un tube d'introduction (5) relié à l'outil de marquage (2, 42, 91, 125) à l'extérieur de l'enceinte (9).

11. Dispositif suivant la revendication 9, caractérisé en ce que l'alimentation en fluide sous pression de l'outil de marquage est réalisé au moyen d'un tuyau souple relié à un tube d'introduction solidaire de la tige de manoeuvre à l'intérieur de l'enceinte, ce tube étant prolongé par une canalisation intérieure à la tige de manoeuvre, traversant le passage à travers l'enceinte et raccordée directement à l'outil de marquage.

**12.** Dispositif suivant la revendication 1, caractérisé en ce que les moyens de déplacement comprennent un chariot (17) monté coulissant suivant un axe (X2-X2) perpendiculaire à l'axe de symétrie (X1 - X1) entraîné par un premier moyen moteur (7) le long de cet axe grâce à un premier moyen de transmission (14) approprié, un deuxième moyen moteur (8) entraînant en rotation le chariot autour de son axe (X2 - X2) grâce à un deuxième moyen de transmission approprié, le chariot étant relié à l'extrémité supérieure de la tige de manoeuvre par un bras radial (19) solidaire du chariot, grâce à des moyens de liaison appropriés.

**13.** Dispositif suivant la revendication 1, caractérisé en ce que les moyens de déplacement comprennent un chariot (52) monté coulissant sur deux arbres (57, 58) dont les axes respectifs (X4 - X4, X5 - X5) sont perpendiculaires à l'axe de symétrie (X3 - X3) et ne s'intersectent pas, chacun de ces deux arbres étant mobile transversalement en restant parallèle à lui-même, suivant un axe qui lui est perpendiculaire et parallèle à l'autre arbre, le déplacement transversal de chacun de ces deux arbres (57, 58) étant assuré par un moyen moteur (75, 76) correspondant.

**14.** Dispositif suivant la revendication 1, caractérisé en ce que les moyens de déplacement comprennent deux vérins télescopiques (120) formant entre eux un angle de l'ordre de 90° dont les tiges sont reliées à l'extrémité (122) de la tige de manoeuvre (118) de telle façon que les mouvements de ces tiges provoquent un mouvement angulaire de la tige (118), la partie de ces vérins opposée aux tiges étant attachée à l'enceinte (116) par une liaison articulée (123).

**15.** Dispositif suivant la revendication 1, caractérisé en ce que les moyens de déplacement comprennent deux vérins télescopiques (104, 105) dont chacune des tiges est reliée suivant un angle d'environ 90° et par le moyen d'une articulation à rotule (100, 101), à l'un de deux bras (111, 112) fixés à l'extrémité (109) de la tige de manoeuvre, ces bras formant entre eux un angle d'environ 90° et définissant avec la tige de commande (92) un angle quelconque.

**16.** Dispositif suivant la revendication 13, caractérisé en ce que les deux arbres mobiles (57, 58) comportent à leurs extrémités des pièces de liaison munies de portées (61, 62, 63, 64) montées sur des arbres fixes (65, 66, 67, 68) perpendiculaires à l'axe de symétrie (X3 -X3) et à l'arbre mobile correspondant.

**17.** Dispositif suivant la revendication 16, caractérisé en ce que l'une au moins des deux pièces de liaison munies de portées coulissantes (61, 62, 63, 64) solidaires de chacune des extrémités des arbres mobiles (57, 58), comporte une liaison (85, 86) avec un moyen de transmission (79, 80) actionné par un moyen moteur (75, 76).

**18.** Dispositif suivant la revendication 12, caractérisé en ce qu'au moins un moyen de transmission permettant de déplacer un chariot (17, 52) suivant au moins un axe (X2 - X2, X5 - X5, X4 - X4) est constitué par une courroie crantée (14, 79, 80) entraînée par un pignon denté (13, 77, 78) d'un moyen moteur (7, 75, 76) dont le brin entraînant (15, 81, 82), parallèle à l'axe de déplacement de ce chariot, a un point d'accrochage (18, 85, 86) avec une pièce entraînant le chariot.

**19.** Dispositif suivant la revendication 1, caractérisé en ce que la liaison entre l'extrémité supérieure (22, 54) de la tige de manoeuvre (10), 46) et les moyens de déplacement (17, 52) de cette tige de manoeuvre est assurée par une pièce intermédiaire (20, 53) comportant une liaison coulissante à l'une de ses extrémités et une articulation à rotule (23, 87) ou à cardan à l'autre extrémité.

**20.** Dispositif suivant la revendication 12, caractérisé en ce que lorsque les moyens de déplacement de la tige de manoeuvre (10) comportent un chariot (17) muni d'un bras radial (19) coulissant sur un arbre secondaire (29), la liaison entre l'extrémité supérieure (22) de la tige de manoeuvre (10) et les moyens de déplacement (17) de cette tige est assurée par une pièce intermédiaire (20) qui comporte à l'une de ses extrémités, une liaison coulissante (21) avec l'extrémité supérieure (22) de la tige de manoeuvre, et qui est reliée à son extrémité opposée, par le moyen d'une double articulation suivant deux arbres perpendiculaires (29, 31) ne s'intersectant pas, avec le bras radial (19), grâce à une pièce (32) montée en rotation à une extrémité autour de l'arbre secondaire (29) sur lequel coulisse le bras radial (19) et à l'autre extrémité autour de l'arbre (31) monté sur la pièce intermédiaire (20).

Fig.1

Fig.2

Fig.2A

Fig.3

Fig.4

Fig.5

Fig.6

Fig.8

Fig. 7

Office européen
des brevets

# RAPPORT DE RECHERCHE EUROPEENNE

Numero de la demande

EP    92 42 0210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 628 996 (RAMSES)<br>* page 3, ligne 11 - page 6, ligne 20; figures 1-14 *<br>--- | 1 | B25H7/00<br>B44B3/06 |
| D,A | FR-A-2 639 860 (TECHNIFOR)<br>* revendications 1-10; figures 1-4 *<br>----- | 1 | |

### DOMAINES TECHNIQUES RECHERCHES (Int. Cl.5)

B25H
B23Q
B44B

Le présent rapport a été établi pour toutes les revendications

| Lieu de la recherche | Date d'achèvement de la recherche | Examinateur |
|---|---|---|
| BERLIN | 25 AOUT 1992 | WUNDERLICH J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)

15